# EUROPÄISCHE PATENTSCHRIFT

(11) **EP 3 269 505 B1**
(45) Veröffentlichungstag und Bekanntmachung des Hinweises auf die Patenterteilung: **02.01.2019**
(21) Anmeldenummer: 16179035.7
(22) Anmeldetag: 12.07.2016
(51) Int. Cl.: B24B 39/02

(54) **BEARBEITUNGSWERKZEUG, INSBESONDERE ROLLIERWERKZEUG, SOWIE VERFAHREN ZUM BEARBEITEN EINER ZYLINDERLAUFFLÄCHE**
MACHINING TOOL, IN PARTICULAR ROLLING TOOL, AND METHOD FOR MACHINING A CYLINDER SURFACE
OUTIL D'USINAGE, EN PARTICULIER OUTIL DE GALETAGE ET PROCEDE D'USINAGE D'UNE SURFACE CYLINDRIQUE

(43) Veröffentlichungstag der Anmeldung: 17.01.2018
(73) Patentinhaber: Hoffmann GmbH Qualitätswerkzeuge, 81241 München (DE)
(72) Erfinder: BARTH, Martin, 90522 Oberasbach (DE); LUKAS, Jürgen, 90408 Nürnberg (DE); LIFKA, Josef, 84095 Furth (DE)
(74) Vertreter: Seemann & Partner Patentanwälte mbB

(56) Entgegenhaltungen:
- EP-A1- 2 871 022
- DE-A1-102011 079 757

## Beschreibung

### Beschreibung

Die Erfindung betrifft ein Bearbeitungswerkzeug, insbesondere Rollierwerkzeug, zum Bearbeiten einer Werkstückoberfläche, insbesondere einer gekrümmten Innenfläche einer Bohrung in einem Werkstück, mit einem Werkzeugkörper, der eine Werkzeugachse definiert, und wenigstens einem durch den Werkzeugkörper getragenen ersten Wälzelement, das um eine erste Wälzelementachse drehbar ist und eine erste Außenfläche aufweist, wobei die erste Außenfläche in wenigstens einem für einen Abrollkontakt mit der Werkstückoberfläche bestimmten Arbeitsabschnitt eine raue Oberflächenstruktur aufweist.

Ferner betrifft die Erfindung eine entsprechende Verwendung eines derartigen Bearbeitungswerkzeugs.

Schließlich betrifft die Erfindung ein Verfahren zum Bearbeiten einer Zylinderlauffläche eines Verbrennungsmotors mit einem entsprechenden Bearbeitungswerkzeug, wobei das Bearbeitungswerkzeug rotierend um die Werkzeugachse in einer Vorschubrichtung, die entlang der Werkzeugachse liegt, in eine Zylinderbohrung eingebracht wird, wobei in die Zylinderlauffläche Nuten eingebracht sind.

Die gattungsbildende WO 2012/084612 A1 offenbart ein Bearbeitungsverfahren zum Bearbeiten einer gekrümmten Werkstückoberfläche eines Werkstücks, wobei eine Rollprägeoperation durchgeführt wird. Hierzu wird ein Wälzelement eines Bearbeitungswerkzeugs an einem zu bearbeitenden Abschnitt der gekrümmten Werkstückoberfläche unter einem Anpressdruck abgerollt. Eine Außenfläche des Wälzelements weist in mindestens einem für einen Abrollkontakt mit der Werkstückoberfläche bestimmten Arbeitsabschnitt eine raue Oberflächenstruktur auf. Der Anpressdruck wird so eingestellt, dass beim Abrollen durch lokales Umformen von Werkstückmaterial ohne Materialabtrag im bearbeiteten Bereich der Werkstückoberfläche eine raue Rollprägestruktur erzeugt wird.

Das Bearbeitungsverfahren kann hierbei beispielsweise zum Bearbeiten der Innenfläche einer Bohrung in einem Werkstück genutzt werden, insbesondere zur Aufrauung der Werkstückoberfläche für eine nachfolgende Beschichtung. Zudem ist ein entsprechendes Bearbeitungswerkzeug in diesem Dokument gezeigt. Die Bearbeitung des Werkstücks dient beispielsweise dazu, eine Innenlauffläche eines Zylinders eines Verbrennungsmotors vorzubereiten, um anschließend eine Beschichtung einbringen zu können, die einen geringen Reibwiderstand aufweist.

Die Bearbeitung mit dem Bearbeitungswerkzeug dient dazu, eine Oberflächenstruktur der Innenfläche des Zylinders vorzusehen, die für ein stabiles Halten der Beschichtung sorgt. Bevor ein derartiges Bearbeitungswerkzeug verwendet wird, werden üblicherweise Nuten in die Innenfläche eines Zylinders eingebracht. Dies kann beispielsweise durch Fräsen oder Sägen wie in WO 2015/003790 A1 geschehen oder durch Behandlung mit Laserstrahlen.

Die in der WO 2012/084612 A1 vorgesehenen Arbeitsabschnitte mit einer rauen Oberflächenstruktur weisen typischerweise Hartstoffkörner auf, die in einer Matrix aus weicherem Material angeordnet sind. Hierbei kann es bei entsprechend hohem Anpressdrücken geschehen, dass die Hartstoffkörper aufgrund zu hoher Kräfte aus dem Matrixverbund herausgelöst werden.

DE 10 2011 079 757 A1 offenbart ein Bearbeitungsverfahren und ein Bearbeitungswerkzeug zum Bearbeiten einer gekrümmten Werkstückoberfläche sowie eines Werkstücks, die in verschiedenen Ausführungsformen Wälzelemente in einem für einen Abrollkontakt mit der Werkstückoberfläche bestimmten Arbeitsabschnitt eine raue Oberflächenstruktur aufweisen. Hierbei wird der Anpressdruck so eingestellt, dass beim Abrollen durch lokales Umformen von Werkstückmaterial ohne Materialabtrag im bearbeiteten Bereich der Werkstückoberfläche eine raue Rollprägestruktur erzeugt wird.

Es ist Aufgabe der vorliegenden Erfindung, ein Bearbeitungswerkzeug, eine Verwendung eines Bearbeitungswerkzeuges und ein Verfahren zum Bearbeiten einer Zylinderlauffläche eines Verbrennungsmotors anzugeben, bei denen die Gefahr des Herauslösens von Hartstoffkörnern bzw. die Gefahr einer plastischen Verformung der rauen Oberflächenstruktur eines Arbeitsabschnittes eines Wälzelements eines entsprechenden Bearbeitungswerkzeuges minimiert ist.

Gelöst wird diese Aufgabe durch ein Bearbeitungswerkzeug, insbesondere Rollierwerkzeug, zum Bearbeiten einer Werkstückoberfläche, insbesondere einer gekrümmten Innenfläche einer Bohrung in einem Werkstück, mit einem Werkzeugkörper, der eine Werkzeugachse definiert, und wenigstens einem durch den Werkzeugkörper getragenen ersten Wälzelement, das um eine erste Wälzelementachse drehbar ist und eine erste Außenfläche aufweist, wobei die erste Außenfläche in wenigstens einem für einen Abrollkontakt mit der Werkstückoberfläche bestimmten Arbeitsabschnitt eine raue Oberflächenstruktur aufweist, das dadurch weitergebildet ist, dass wenigstens ein durch den Werkzeugkörper getragenes zweites Wälzelement vorgesehen ist, das um eine zweite Wälzelementachse drehbar ist und eine zweite Außenfläche aufweist, wobei die zweite Außenfläche in wenigstens einem für einen Abrollkontakt mit der Werkstückoberfläche bestimmten Arbeitsabschnitt einen Abstand zur Werkzeugachse aufweist, der geringer als der Abstand des Arbeitsabschnitts des ersten Wälzelements ist, wobei eine Käfigaufnahme für das wenigstens eine erste Wälzelement und eine Käfigaufnahme für das wenigstens eine zweite Wälzelement vorgesehen ist, wobei die Käfigaufnahme für das wenigstens eine erste Wälzelement in axialer Richtung größer als die Längserstreckung des wenigstens einen ersten Wälzelements ist.

Hierdurch ist eine vorgebbare axiale Verschiebung oder Verschiebbarkeit des ersten Wälzelements ermöglicht oder vorgesehen. Hierbei ist vorzugsweise die raue Oberflächenstruktur in dem Arbeitsabschnitt der ersten Außenfläche des ersten Wälzelements gebildet durch oder umfassend Hartstoffkörner, die radial hervorstehen. Bevorzugte Hartstoffkörner haben eine mittlere Korngröße von vorzugsweise über 15 µm und insbesondere vorzugsweise zwischen 30 µm und 200 µm. Es ist bei dem radialen Abstand bzw. dem Abstand der ersten Außenfläche des ersten Wälzelements zur Werkzeugachse insbesondere der mittlere Abstand der Außenfläche der Hartstoffkörner zur Werkzeugachse zu verstehen, wobei hierbei der radiale Abstand insbesondere gemeint ist. Insbesondere ist ein mittlerer Abstand der aus dem Arbeitsabschnitt des ersten Wälzelements bzw. der Werkstückoberfläche herausragenden Hartstoffkörner zur Werkzeugachse gemeint.

Durch das erfindungsgemäße Bearbeitungswerkzeug kann eine Arbeitsteilung vorgenommen werden, dergestalt, dass mit dem Arbeitsabschnitt der zweiten Außenfläche des zweiten Wälzelements eine Vorpressung des Werkstücks bzw. der Werkstückoberfläche vorgenommen wird und mit dem Arbeitsabschnitt des ersten Wälzelements dann über die raue Oberflächenstruktur bzw. die die raue Oberflächenstruktur definierenden Hartstoffkörner eine raue Oberfläche beim Werkstück erzeugt wird. Vorzugsweise werden sowohl das erste Wälzelement als auch das zweite Wälzelement mit einem jeweils vorgebbaren Anpressdruck an die Oberfläche des Werkstücks gedrückt.

Vorzugsweise ist der Arbeitsabschnitt des zweiten Wälzelements glatt. Insbesondere vorzugsweise umfasst der Arbeitsabschnitt des zweiten Wälzelements einen Stahl, vorzugsweise einen gehärteten Stahl.

Vorzugsweise weist der Arbeitsabschnitt des ersten Wälzelements nach außen vorstehende Erhebungen aus einem harten Material, wie Hartmetall, Diamant, Korund oder kubisches Bornitrid auf. Es handelt sich hierbei vorzugsweise um die eben schon genannten Hartstoffkörner mit der genannten mittleren Korngröße. Diese Hartstoffkörner sind vorzugsweise in einer Lotmatrix, beispielsweise aus Kupferzinn, eingebracht. Hierbei ragen die Hartstoffkörner aus der Lotmatrix radial nach außen heraus.

Vorzugsweise eilt der Arbeitsabschnitt des ersten Wälzelements bei einer Vorschubrichtung des Bearbeitungswerkzeugs in der Werkzeugachse dem Arbeitsabschnitt des zweiten Wälzelements axial hinterher. Hierdurch ist gewährleistet, dass zunächst eine Vorpressung bzw. plastische Vorverformung der Werkstückoberfläche geschieht und danach eine Anrauung der Werkstückoberfläche.

Vorzugsweise eilt der Arbeitsabschnitt des ersten Wälzelements bei einer Vorschubrichtung des Bearbeitungswerkzeuges in der entgegengesetzten Richtung dem Arbeitsabschnitt des zweiten Wälzelements auch axial hinterher. Hierdurch wird gewährleistet, dass die vorher schon angeraute Oberfläche nicht durch einen hinterhereilenden Arbeitsabschnitt eines zweiten Wälzelements wieder glatt gedrückt wird. Diese bevorzugte Ausführungsform wird insbesondere dadurch erreicht, dass das erste Wälzelement in axialer Richtung verschiebbar gelagert ist.

Vorzugsweise sind die Drehachsen der Wälzelemente parallel zu der Werkzeugachse.

Vorzugsweise ist die Käfigaufnahme für das wenigstens eine erste Wälzelement so ausgestaltet, dass das wenigstens eine erste Wälzelement bei einem Bearbeitungsvorgang und einer Bewegung des Bearbeitungswerkzeugs in axialer Vorschubrichtung an dem hinteren Ende gelagert ist.

Hierzu weist die Käfigaufnahme für das wenigstens eine erste Wälzelement einen hinteren Anschlag auf. Der hintere Anschlag liegt hierbei vorzugsweise in axialer Vorschubrichtung hinter dem hinteren Anschlag der Käfigaufnahme für das wenigstens eine zweite Wälzelement.

Vorzugsweise weist die Käfigaufnahme für das wenigstens eine zweite Wälzelement eine axiale Länge auf, die für eine axiale Fixierung des zweiten Wälzelements sorgt. Das zweite Wälzelement ist somit nicht oder im Wesentlichen nicht in axialer Richtung verschiebbar, sondern in dessen axialer Lage fixiert.

Vorzugsweise weisen die Käfigaufnahmen axiale Mittelpositionen auf, die in Bezug auf die Werkzeugachse auf der gleichen Höhe sind oder liegen. Hierbei ist insbesondere eine radial gleiche Höhe bzw. eine Höhe in einer senkrechten Ebene zur Werkzeugachse vorgesehen.

Der Käfig mit den Käfigaufnahmen ist vorzugsweise aus einem anderen Material gefertigt als das Material der Wälzelemente.

Vorzugsweise sind mehrere erste Wälzelemente und mehrere zweite Wälzelemente vorgesehen. Vorzugsweise wechseln sich erste Wälzelemente und zweite Wälzelemente in Umfangsrichtung des Bearbeitungswerkzeugs ab.

Die Aufgabe wird ferner durch die Verwendung eines erfindungsgemäßen Bearbeitungswerkzeuges zum Rollieren oder Hohnen einer mit Nuten versehenen Zylinderlauffläche eines Verbrennungsmotors gelöst.

Ferner wird die Aufgabe gelöst durch ein Verfahren zum Bearbeiten einer Zylinderlauffläche eines Verbrennungsmotors mit einem erfindungsgemäßen Bearbeitungswerkzeug, wobei das Bearbeitungswerkzeug rotierend um die Werkzeugachse in einer Vorschubrichtung, die entlang der Werkzeugachse liegt, in eine Zylinderbohrung eingebracht wird, wobei in die Zylinderlauffläche Nuten eingebracht sind, das dadurch weitergebildet ist, dass das wenigstens eine erste Wälzelement und das wenigstens eine zweite Wälzelement durch den Kontakt mit der Zylinderlauffläche in Rotation versetzt werden, wobei der Arbeitsabschnitt des wenigstens einen zweiten Wälzelements dazu dient, das Material der Zylinderlauffläche zu verpressen, um bei den Stegen, die die Nuten umgeben, eine Hinterschneidung zu erzielen und der Arbeitsabschnitt des wenigstens einen ersten Wälzelements dazu dient, die Innenoberfläche der verpressten Stege anzurauen, wobei der Arbeitsabschnitt des wenigstens einen ersten Wälzelements in Vorschubrichtung hinter dem Arbeitsabschnitt des wenigstens einen zweiten Wälzelements hinterhereilt.

Durch das erfindungsgemäße Verfahren ist eine sehr verlässliche Bearbeitung der Werkstückoberfläche möglich. Insbesondere findet kein Herauslösen von die raue Oberflächenstruktur des Arbeitsabschnitts des ersten Wälzelements bestimmenden Materialien statt. Insbesondere wird die raue Oberflächenstruktur durch Hartstoffkörner gebildet, die radial aus dem ersten Wälzelement, insbesondere dem Arbeitsabschnitt des ersten Wälzelements, hervorstehen.

Vorzugsweise eilt auch bei einer Umkehr der Vorschubrichtung der Arbeitsabschnitt des wenigstens einen ersten Wälzelements hinter dem Arbeitsabschnitt des wenigstens einen zweiten Wälzelements hinterher. Hierdurch wird für eine sehr saubere und exakte Bearbeitung der Werkstückoberfläche gesorgt.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematisch teilweise Schnittdarstellung durch einen Teil eines erfindungsgemäßen Bearbeitungswerkzeugs,
- Fig. 2: eine schematische Ansicht eines erfindungsgemäßen Bearbeitungswerkzeugs in einer ersten Vorschubrichtung und
- Fig. 3: das erfindungsgemäße Bearbeitungswerkzeug aus Fig. 2 in einer entgegengesetzten Vorschubrichtung in schematischer Darstellung.

In den Zeichnungen sind jeweils gleiche oder gleichartige Elemente und/oder Teile mit denselben Bezugsziffern versehen, so dass von einer erneuten Vorstellung jeweils abgesehen wird.

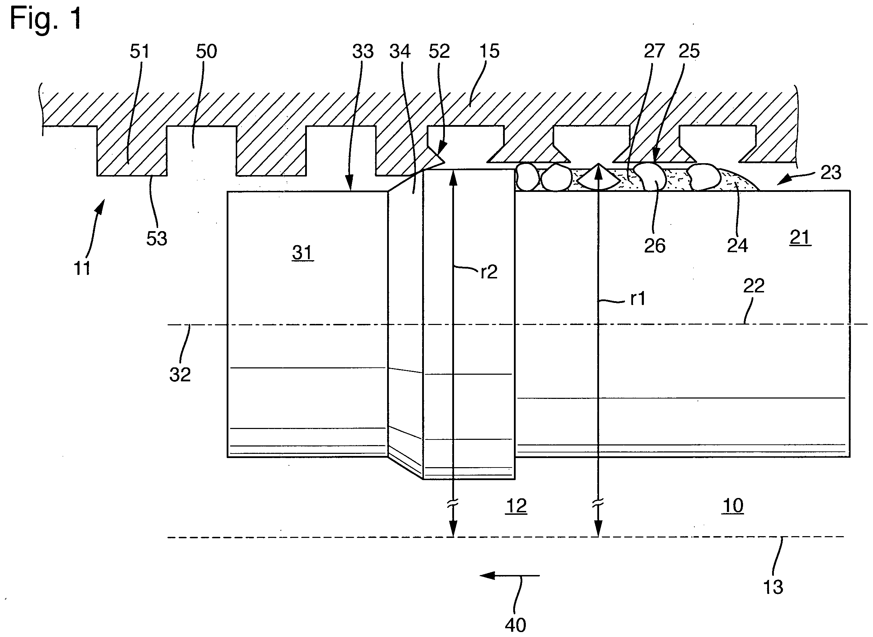

Fig. 1 zeigt schematisch ein erfindungsgemäßes Bearbeitungswerkzeug 10, das auch als Rollierwerkzeug bezeichnet werden kann. Das Bearbeitungswerkzeug 10 weist einen Werkzeugkörper 12 auf, der eine Werkzeugachse 13 hat. Um die Werkzeugachse 13 wird das Bearbeitungswerkzeug rotierend betrieben, wobei dieses auch beispielsweise in Vorschubrichtung in axialer Richtung bewegt wird.

Am Außenumfang des Bearbeitungswerkzeuges 10 sind Wälzelemente 21 und 31 vorgesehen, die auch als Rollierrollen bezeichnet werden können. In Fig. 1 sind zwei verschiedene Wälzelemente, nämlich ein erstes Wälzelement 21 und ein zweites Wälzelement 31, die auf dem Bearbeitungswerkzeug in Umfangsrichtung des Bearbeitungswerkzeuges hintereinander angeordnet sind, gleichzeitig dargestellt. Durch die Wellenlinie zwischen den beiden Wälzelementen 21 und 31 soll dieses schematisch angedeutet sein.

Das Bearbeitungswerkzeug 10 dient dazu, eine Zylinderlauffläche 11, die mit Nuten 50 und Stegen 51 versehen ist, zu bearbeiten. Um die Nuten 50 vorzusehen, werden diese zunächst in einem ersten Bearbeitungsschritt beispielsweise mit Sägeblättern geschnitten. Es können auch andere Arten vorgesehen sein, um derartige Nuten herzustellen, beispielsweise mit Laserbearbeitung oder durch Fräsen.

Das Bearbeitungswerkzeug 10 dient dazu, die Innenoberfläche 53 der Zylinderlauffläche 11 zu bearbeiten, und zwar dergestalt, dass zum einen eine Anpressung geschieht, durch die Hinterschneidungen 52 erzeugt werden und zum anderen eine Anrauung der Innenoberfläche 53 vorgenommen wird. Dieses geschieht im Stand der Technik beispielsweise gemäß WO 2012/084612 A1 oder EP 2 871 022 A1 mit einem Rollierwerkzeug, das einen Arbeitsabschnitt bei Wälzelementen aufweist, bei dem Hartstoffkörner eingebracht sind, die zum einen ein Verpressen der Oberfläche ermöglichen und zum anderen eine Anrauung.

Gemäß der Erfindung sind zwei unterschiedliche Wälzelemente, nämlich ein erstes Wälzelement 21 und ein zweites Wälzelement 31 vorgesehen, die um die Wälzelementachsen 22 bzw. 32 rotierend antreibbar sind. Das zweite Wälzelement ist in Vorschubrichtung 40 dem ersten Wälzelement voreilend und sieht eine Verpressung der Stege 51 so vor, dass eine Hinterschneidung 52 erzielt wird. Um dieses zu ermöglichen, ist ein Arbeitsabschnitt 34 vorgesehen, dessen Oberfläche einen Abstand r2 zur Werkzeugachse 13 aufweist, der etwas kleiner ist als der Abstand r1 der Hartstoffkörner 26, die im Arbeitsabschnitt 24 des ersten Wälzelements 21 vorgesehen sind. Die Hartstoffkörner 26, beispielsweise Diamantkörner, sind hierzu in einer Lotmatrix 27, beispielsweise aus Kupferzinn, eingebettet. Hierdurch ergeben sich Erhebungen 25 über der Lotmatrix 27, mittels der eine Oberflächenbearbeitung der Oberfläche 53 vorgenommen wird, nachdem diese durch den Arbeitsabschnitt 34 des zweiten Wälzelements 31 schon vorgepresst worden sind. Aufgrund dieser Maßnahme wirkt eine geringere Kraft auf die Hartstoffkörner 26 des ersten Wälzelements 21 als im Stand der Technik bekannt, wodurch ein Herauslösen dieser Hartstoffkörner vermieden wird.

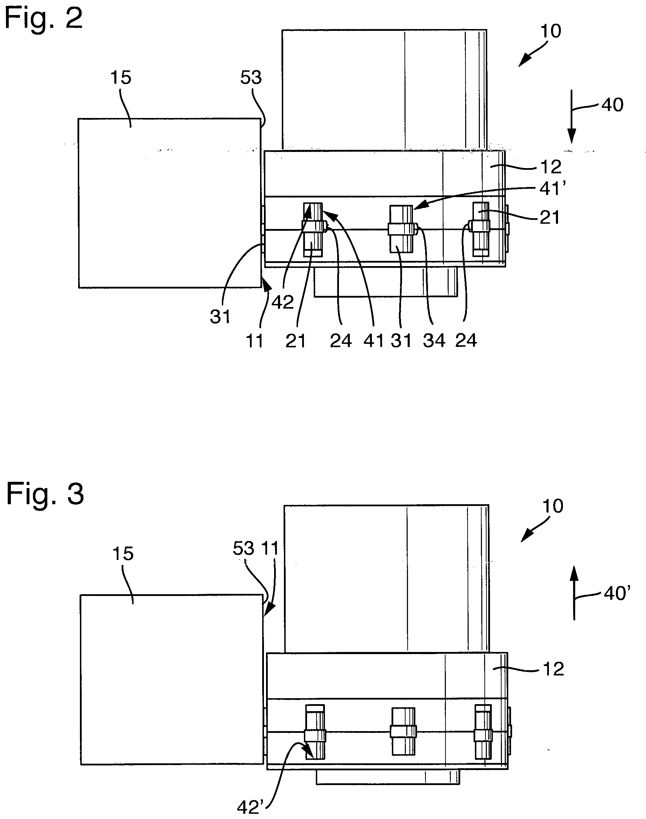

Gemäß der Erfindung ist bevorzugterweise zudem vorgesehen, dass in einer entgegengesetzten Richtung genau das Gleiche passiert, nämlich dass die Verpressung durch das zweite Wälzelement 31 der Anrauung durch das erste Wälzelement 21 vorauseilend ist. Dieses geschieht, wie sehr gut in den Fig. 2 und 3 schematisch in einer Ansicht eines erfindungsgemäßen Bearbeitungswerkzeugs 10 dargestellt ist, dadurch, dass Käfigaufnahmen 41 für die ersten Wälzelemente 21 vorgesehen sind, die eine Längserstreckung haben, die größer sind als die Längserstreckung der ersten Wälzelemente 21. Hierdurch können in längsaxialer Richtung die ersten Wälzelemente 21 axial verschoben werden. Die Käfigaufnahmen 41' der zweiten Wälzelemente 31 sind auf die Länge des zweiten Wälzelements 31 exakt angepasst, so dass diese in längsaxialer Richtung nicht verschiebbar sind.

In Fig. 2 ist ein Bearbeitungsschritt in Vorschubrichtung 40 gezeigt. Hier ist zu erkennen, dass die ersten Wälzelemente 21 in den Käfigaufnahmen 41 am hinteren Anschlag 42 anliegen. In Vorschubrichtung vorne ist, wie zu erkennen ist, eine entsprechende Lücke in der Käfigaufnahme 41 vorgesehen. Ferner ist in Fig. 2 auch zu erkennen, dass mehrere Wälzelemente vorgesehen sind, wobei sich erste Wälzelemente 21 und zweite Wälzelemente 31 in Umfangsrichtung des Bearbeitungswerkzeugs 10 abwechseln. Es sind zudem auch die Arbeitsabschnitte 24 des ersten Wälzelements 21 und des zweiten Wälzelementes 31 gezeigt. Nur schematisch ist hier ein Werkstück 15 gezeigt, dessen Innenoberfläche 53 zu bearbeiten ist.

Bevorzugterweise wird mit dem erfindungsgemäßen Bearbeitungswerkzeug 10 eine Zylinderlauffläche eines Verbrennungsmotors bearbeitet.

In einer entgegengesetzten Vorschubrichtung 40', die in Fig. 3 gezeigt ist, liegen die ersten Wälzelemente 21 an dem anderen hinteren Ende 42' bzw. in Vorschubrichtung 40 dem vorderen Ende der jeweiligen Käfigaufnahme 41 an.

Die Käfigaufnahmen 41 und 41' sind beispielsweise in einem Messingkäfig vorgesehen, damit sich die vorzugsweise stahlumfassenden Wälzelemente in den Käfigaufnahmen nicht festfressen.

In diesen Ausführungsbeispielen sind die Wälzelemente als zylinderförmige Wälzelemente dargestellt. Diese können allerdings auch konusförmig sein, wie in EP 2 871 022 A1 gezeigt ist.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 10: Bearbeitungswerkzeug
- 11: Zylinderlauffläche
- 12: Werkzeugkörper
- 13: Werkzeugachse
- 15: Werkstück
- 21: erstes Wälzelement
- 22: erste Wälzelementachse
- 23: erste Außenfläche
- 24: Arbeitsabschnitt
- 25: Erhebung
- 26: Hartstoffkorn
- 27: Lotmatrix
- 31: zweites Wälzelement
- 32: zweite Wälzelementachse
- 33: zweite Außenfläche
- 34: Arbeitsabschnitt
- 40: Vorschubrichtung
- 40': entgegengesetzte Vorschubrichtung
- 41: Käfigaufnahme
- 41': Käfigaufnahme
- 42: hinteres Ende
- 42': hinteres Ende
- 50: Nut
- 51: Steg
- 52: Hinterschneidung
- 53: Innenoberfläche
- r1: Abstand
- r2: Abstand

## Patentansprüche

1. Bearbeitungswerkzeug (10), insbesondere Rollierwerkzeug, zum Bearbeiten einer Werkstückoberfläche (11), insbesondere einer gekrümmten Innenfläche einer Bohrung in einem Werkstück, mit einem Werkzeugkörper (12), der eine Werkzeugachse (13) definiert, und wenigstens einem durch den Werkzeugkörper (12) getragenen ersten Wälzelement (21), das um eine erste Wälzelementachse (22) drehbar ist und eine erste Außenfläche (23) aufweist, wobei die erste Außenfläche (23) in wenigstens einem für einen Abrollkontakt mit der Werkstückoberfläche (11) bestimmten Arbeitsabschnitt (24) eine raue Oberflächenstruktur aufweist, **dadurch gekennzeichnet, dass** wenigstens ein durch den Werkzeugkörper (12) getragenes zweites Wälzelement (31) vorgesehen ist, das um eine zweite Wälzelementachse (32) drehbar ist und eine zweite Außenfläche (33) aufweist, wobei die zweite Außenfläche (33) in wenigstens einem für einen Abrollkontakt mit der Werkstückoberfläche (11) bestimmten Arbeitsabschnitt (34) einen Abstand (r2) zur Werkzeugachse (13) aufweist, der geringer als der Abstand (r1) des Arbeitsabschnitts (24) des ersten Wälzelements (21) ist, wobei eine Käfigaufnahme (41) für das wenigstens eine erste Wälzelement (21) und eine Käfigaufnahme (42') für das wenigstens eine zweite Wälzelement (31) vorgesehen sind, wobei die Käfigaufnahme (41) für das wenigstens eine erste Wälzelement (21) in axialer Richtung größer als die Längserstreckung des wenigstens einen ersten Wälzelements (21) ist, so dass eine vorgebbare axiale Verschiebung des ersten Wälzelements (21) vorgesehen ist.

2. Bearbeitungswerkzeug (10) nach Anspruch 1, **dadurch gekennzeichnet, dass** der Arbeitsabschnitt (34) des zweiten Wälzelements (31) glatt ist.

3. Bearbeitungswerkzeug (10) nach Anspruch 1 oder 2, **dadurch gekennzeichnet, dass** der Arbeitsabschnitt (24) des ersten Wälzelements (21) nach außen vorstehende Erhebungen (25) aus einem harten Material (26), wie Hartmetall, Diamant, Korund oder kubisches Bornitrid, aufweist.

4. Bearbeitungswerkzeug (10) nach einem der Ansprüche 1 bis 3, **dadurch gekennzeichnet, dass** der Arbeitsabschnitt (24) des ersten Wälzelements (21) bei einer Vorschubrichtung (40) des Bearbeitungswerkzeugs (10) in der Werkzeugachse (13) dem Arbeitsabschnitt (34) des zweiten Wälzelements (31) axial hinterhereilt.

5. Bearbeitungswerkzeug (10) nach Anspruch 4, **dadurch gekennzeichnet, dass** der Arbeitsabschnitt (24) des ersten Wälzelements (21) bei einer Vorschubrichtung (40) des Bearbeitungswerkzeugs (10) in der entgegengesetzten Richtung (40') dem Arbeitsabschnitt (34) des zweiten Wälzelements (31) axial auch hinterhereilt.

6. Bearbeitungswerkzeug (10) nach einem der Ansprüche 1 bis 5, **dadurch gekennzeichnet, dass** die Käfigaufnahme (41) des wenigstens einen ersten Wälzelements (21) so ausgestaltet ist, dass das wenigstens eine erste Wälzelement (21) bei einem Bearbeitungsvorgang und einer Bewegung des Bearbeitungswerkzeugs (10) in axialer Vorschubrichtung (40) an dem hinteren Ende (42) gelagert ist.

7. Bearbeitungswerkzeug (10) nach einem der Ansprüche 1 bis 6, **dadurch gekennzeichnet, dass** die Käfigaufnahme (41') für das wenigstens eine zweite Wälzelement (31) eine axiale Länge aufweist, die für eine axiale Fixierung des zweiten Wälzelements (31) sorgt.

8. Bearbeitungswerkzeug (10) nach einem der Ansprüche 1 bis 7, **dadurch gekennzeichnet, dass** die Käfigaufnahmen (41, 41') axiale Mittelpositionen aufweisen, die in Bezug auf die Werkzeugachse (13) auf der gleichen Höhe sind.

9. Verwendung eines Bearbeitungswerkzeugs (10) nach einem der Ansprüche 1 bis 8 zum Rollieren oder Hohnen einer mit Nuten versehenen Zylinderlauffläche eines Verbrennungsmotors.

10. Verfahren zum Bearbeiten einer Zylinderlauffläche (11) eines Verbrennungsmotors mit einem Bearbeitungswerkzeug (10) nach einem der Ansprüche 1 bis 8, wobei das Bearbeitungswerkzeug (10) rotierend um die Werkzeugachse (13) in einer Vorschubrichtung (40), die entlang der Werkzeugachse (13) liegt, in eine Zylinderbohrung eingebracht wird, wobei in die Zylinderlauffläche (11) Nuten (50) eingebracht sind, **dadurch gekennzeichnet, dass** das wenigstens eine erste Wälzelement (21) und das wenigstens eine zweite Wälzelement (31) durch den Kontakt mit der Zylinderlauffläche (11) in Rotation versetzt werden, wobei der Arbeitsabschnitt (34) des wenigstens einen zweiten Wälzelements (31) dazu dient, das Material der Zylinderlauffläche (11) zu verpressen, um bei den Stegen (51) die die Nuten (50) umgeben, eine Hinterschneidung (52) zu erzielen und der Arbeitsabschnitt (24) des wenigstens einen ersten Wälzelements (21) dazu dient, die Innenoberfläche (53) der verpressten Stege (51) anzurauen, wobei der Arbeitsabschnitt (24) des wenigstens einen ersten Wälzelements (21) in Vorschubrichtung (40) hinter dem Arbeitsabschnitt (34) des wenigstens einen zweiten Wälzelements (31) hinterhereilt.

11. Verfahren nach Anspruch 10, **dadurch gekennzeichnet, dass** auch bei einer Umkehr (40') der Vorschubrichtung (40) der Arbeitsabschnitt (24) des wenigstens einen ersten Wälzelements (21) hinter dem Arbeitsabschnitt (34) des wenigstens einen zweiten Wälzelements (31) hinterhereilt.

## Claims

1. A machining tool (10), in particular a rolling tool, for machining a workpiece surface (11), in particular a curved inner surface of a bore in a workpiece, with a tool body (12) that defines a tool axis (13), and at least one first roller element (21) that is borne by the tool body (12) and is rotatable about a first roller element axis (22) and has a first outer surface (23), wherein the first outer surface (23) has a rough surface structure in at least one working section (24) designated for rolling contact with the workpiece surface (11), **characterized in that** at least one second roller element (31) borne by the tool body (12) is provided that is rotatable about a second roller element axis (32) and has a second outer surface (33), wherein the second outer surface (33) has a distance (r2) to the tool axis (13) in at least one working section (34) that is designated for rolling contact with the workpiece surface (11) and is less than the distance (r1) of the working section (24) of the first roller element (21), wherein a cage holder (41) is provided for the at least one first roller element (21), and a cage holder (42') is provided for the at least one second roller element (31), wherein the cage holder (41) for the at least one first roller element (21) is greater in an axial direction than the longitudinal extension of the at least one first roller element (21) such that a specifiable axial shift of the first roller element (21) is provided.

2. The machining tool (10) according to claim 1, **characterized in that** the working section (34) of the second roller element (31) is smooth.

3. The machining tool (10) according to claim 1 or 2, **characterized in that** the working section (24) of the first roller element (21) has outwardly projecting elevations (25) that consist of a hard material (26) such as hard metal, diamond, corundum, or cubic boron nitride.

4. The machining tool (10) according to one of claims 1 to 3, **characterized in that** the working section (24) of the first roller element (21) axially follows the working section (34) of the second roller element (31) given a feed direction (40) of the machining tool (10) in the tool axis (13).

5. The machining tool (10) according to claim 4, **characterized in that** the working section (24) of the first roller element (21) also axially follows the working section (34) of the second roller element (31) given a feed direction (40) of the machining tool (10) in the opposite direction (40').

6. The machining tool (10) according to one of claims 1 to 5, **characterized in that** the cage holder (41) of the at least one first roller element (21) is configured such that the at least one first roller element (21) is supported in a bearing at the rear end (42) during a machining process given a movement of the machining tool (10) in the axial feed direction (40).

7. The machining tool (10) according to one of claims 1 to 6, **characterized in that** the cage holder (41') has an axial length for the at least one second roller element (31) that ensures axial fixation of the second roller element (31).

8. The machining tool (10) according to one of claims 1 to 7, **characterized in that** the cage holders (41, 41') have axial center positions which are at the same height with reference to the tool axis (13).

9. The use of a machining tool (10) according to one of claims 1 to 8 for rolling or honing a cylinder bearing surface provided with grooves of an internal combustion engine.

10. A method for machining a cylinder running surface (11) of an internal combustion engine by a machining tool (10) according to one of claims 1 to 8, wherein the machining tool (10) is introduced into a cylinder bore in a feed direction (40) that lies along the tool axis (13), while rotating about the tool axis (13), wherein grooves (50) are introduced into the cylinder running surface (11), **characterized in that** the at least one first roller element (21) and the at least one second roller element (31) are set in rotation by the contact with the cylinder running surface (11), wherein the working section (34) of the at least one second roller element (31) serves to press the material of the cylinder running surface (11) in order to obtain an undercut (52) on the bars (51) that surround the grooves (50), and the working section (24) of the at least one first roller element (21) serves to roughen the inner surface (53) of the pressed bars (51), wherein the working section (24) of the at least one first roller element (21) follows the working section (34) of the at least one second roller element (31) in the feed direction (40).

11. The method according to claim 10, **characterized in that** even given a reversal (40') of the feed direction (40), the working section (24) of the at least one first roller element (21) follows the working section (34) of the at least one second roller element (31).

## Revendications

1. Outil d'usinage (10), en particulier un outil de roulage, pour usiner une surface de pièce (11), en particulier une surface intérieure courbe d'un alésage dans une pièce, comportant un corps d'outil (12) qui définit un axe d'outil (13), et au moins un premier élément de roulement (21) porté par le corps d'outil (12), qui peut tourner autour d'un premier axe d'élément de roulement (22) et comportant une première surface extérieure (23), dans lequel la première surface extérieure (23) présente une structure superficielle rugueuse dans au moins une partie de travail (24) configurée pour un contact de roulement avec la surface de pièce (11), **caractérisé en ce qu'**au moins un second élément de roulement (31) porté par le corps d'outil (12) est prévu, lequel second élément de roulement peut tourner autour d'un second axe d'élément de roulement (32) et comporte une seconde surface extérieure (33), dans lequel la seconde surface extérieure (33) a, dans au moins une partie de travail (34) configurée pour un contact de roulement avec la surface de pièce (11), une distance (r2) par rapport à l'axe d'outil (13) qui est plus petite que la distance (r1) de la partie de travail (24) du premier élément de roulement (21), dans lequel un logement analogue à une cage (41) est prévu pour le au moins un premier élément de roulement (21) et un logement analogue à une cage (42') est prévu pour le au moins un second élément de roulement (31), dans lequel le logement analogue à une cage (41) pour le au moins un premier élément de roulement (21) dans une direction axiale est plus grand que l'extension longitudinale du au moins un premier élément de roulement (21), de sorte qu'un déplacement axial pouvant être prédéfini du premier élément de roulement (21) est prévu.

2. Outil d'usinage (10) selon la revendication 1, **caractérisé en ce que** la partie de travail (34) du second élément de roulement (31) est lisse.

3. Outil d'usinage (10) selon la revendication 1 ou 2, **caractérisé en ce que** la partie de travail (24) du premier élément de roulement (21) comporte des saillies (25) proéminentes vers l'extérieur et constituées d'un matériau dur (26), tel qu'un métal dur, un diamant, du corindon ou du nitrure de bore cubique.

4. Outil d'usinage (10) selon l'une des revendications 1 à 3, **caractérisé en ce que** la partie de travail (24) du premier élément de roulement (21) est disposée axialement derrière la partie de travail (34) du second élément de roulement (31) dans une direction d'avance (40) de l'outil de d'usinage (10) sur l'axe d'outil (13).

5. Outil d'usinage (10) selon la revendication 4, **caractérisé en ce que** la partie de travail (24) du premier élément de roulement (21) est également disposée axialement derrière la partie de travail (34) du second élément de roulement (31) dans une direction (40') opposée à la direction d'avance (40) de l'outil d'usinage (10).

6. Outil d'usinage (10) selon l'une des revendications 1 à 5, **caractérisé en ce que** le logement analogue à une cage (41) du au moins un premier élément de roulement (21) est configuré de sorte que le au moins un premier élément de roulement (21) est monté sur l'extrémité arrière (42) pendant une opération d'usinage (10) et d'un déplacement de l'outil de travail (10) dans une direction d'avance axiale (40).

7. Outil d'usinage (10) selon l'une des revendications 1 à 6, **caractérisé en ce que** le logement analogue à une cage (41') pour le au moins un second élément de roulement (31) a une longueur axiale qui permet une fixation axiale du second élément de roulement (31).

8. Outil d'usinage (10) selon l'une des revendications 1 à 7, **caractérisé en ce que** les logements analogues à des cages (41, 41') comportent des positions centrales axiales qui sont à la même hauteur par rapport à l'axe d'outil (13).

9. Utilisation d'un outil d'usinage (10) selon l'une des revendications 1 à 8 pour rouler ou rectifier une surface de glissement de cylindre munie de gorgets d'un moteur à combustion interne.

10. Procédé pour usiner une surface de glissement de cylindre (11) d'un moteur à combustion interne avec un outil d'usinage (10) selon l'une des revendications 1 à 8, dans lequel l'outil d'usinage (10) est inséré dans un alésage de cylindre de façon à pouvoir tourner autour de l'axe d'outil (13) dans une direction d'avance (40) qui se situe le long de l'axe d'outil (13), dans lequel des gorgets (50) sont introduites dans la surface de glissement de cylindre (11), **caractérisé en ce que** le au moins un premier élément de roulement (21) et le au moins un second élément de roulement (31) sont déplacés en rotation par le contact avec la surface de glissement de cylindre (11), dans lequel la partie de travail (34) du au moins un second élément de roulement (31) permet de comprimer le matériau de la surface de glissement de cylindre (11) afin d'entourer les gorgets (50) avec les nervures (51), et de réaliser une contre-dépouille (52), et la partie de travail (24) du au moins un premier élément de roulement (21) sert à rugosifier la surface intérieure (53) des nervures comprimées (51), dans lequel la partie de travail (24) du au moins un premier élément de roulement (21) est disposée derrière la partie de travail (34) du au moins un second élément de roulement (31) dans la direction d'avance (40).

11. Procédé selon la revendication 10, **caractérisé en ce que** la partie de travail (24) du au moins un premier élément de roulement (21) est disposée derrière la partie de travail (34) du au moins un second élément de roulement (31) également en cas d'inversion (40') de la direction d'avance (40).
